# EUROPEAN PATENT APPLICATION

(11) **EP 4 737 976 A1**
(43) Date of publication of application: **06.05.2026**
(21) Application number: 25163723.7
(22) Date of filing: 14.03.2025
(51) Int. Cl.: G02B 21/24, G02B 21/02, G01N 15/1434, G01N 15/10, G02B 21/00, A61B 1/00

(54) **OBJECTIVE LENS UNIT FOR A MICROSCOPE, MICROSCOPE COMPRISING THE OBJECTIVE LENS UNIT, AND METHOD OF SETTING THE OBJECT PLANE OF A MICROSCOPE**

(30) Priority: 04.11.2024 EP 24210649
(71) Applicant: Mettler-Toledo GmbH, 8606 Greifensee (CH)
(72) Inventor: Link, Sandro, Illnau (CH); Gati, Rudolf, Mellingen (CH)
(74) Representative: Mettler-Toledo

(57) **Abstract**

An objective lens unit (6) for a microscope includes at least one optically detectable target (48) on at least one optical component of the objective lens unit. The at least one optically detectable target has a well-defined position relative to a distal front end (62) of the enclosure of the objective lens unit (6) or a distal end of the microscope, respectively. An adjustable lens (65) of the objective lens unit is adjusted to sharply image at least one of the at least one optically detectable target for instance on a sensor of a camera attached to the microscope. Thus, a setting of the adjustable lens for a reference object plane is determined. The adjustable lens may subsequently be adjusted to shift the object plane a certain distance into a distal direction to set the object plane at an intended location a distance (s) distal from the distal front end (62) of the enclosure of the objective lens unit (6) or a distal end of the microscope, respectively, in a sample volume (100).

## Description

### Technical Field

The herein claimed subject matter relates generally to instruments and methods applicable for microscopy. More in particular, it relates to the subject matter set forth in the claims.

### Background Art

In certain applications of microscopy, it is required to set the object plane of the microscope, i.e., a plane in which objects are sharply imaged, a certain distance in front of, or distal from, a front end or front end optical aperture of the microscope, without an object to be referenced present during the object plane setting. This may typically be the case in, while not limited to, in-line and in-situ microscopy, in particular when the objects to be observed move through a sample volume. In said case, there is, for instance, no stationary object which could be focused on. One typical, while again non-limiting, instance is cytometry, in particular image cytometry of bioprocesses.

Bioprocesses are processes which use complete living, biological cells or their components such as for example bacteria, enzymes or chloroplasts, to obtain desired products. A bioprocess is typically done in a bioreactor, i.e. a process vessel which is preferably either reusable and therefore sterilizable tank or a single-use bag. The biological cells being part of the bioprocesses are dispensed in a liquid medium, establishing thereby the suitable environment for the desired process. Typically, the medium comprises for example nutrients for the cells in question as well as gases needed by them such as O₂ and CO₂. In most cases, it is important to ensure that no cells other than the ones involved in the bioprocess are present in the bioreactor, implying that it is preferred to maintain a sterile barrier between the process and the outside as long as possible thereby minimizing the number and duration of occasions where a contamination with unwanted cells can happen. Often, the bioprocess uses a means to mix the cells and the medium constantly. Examples of such means are stirrers arranged on the inside of the bioreactor or shakers which move the whole bioreactor. Therefore, in general, the cells suspended in the media are moving inside the bioreactor. In many cases, the medium is closely monitored to ensure that the desired conditions are maintained. For this monitoring, there are today different optical, opto-chemical and electrochemical sensors available and in use which can measure for example the pH-value or the amount of dissolved oxygen in-line or in-situ in a reliable manner. There is, however, currently no similar reliable measurement device available to monitor the cells directly.

In-line or in-situ measurements are - in the case of a process, in particular a bioprocess- measurements which take place directly in the reactor respectively in the bioreactor or in a tube transporting the fluid to be monitored. In particular, the fluid to be monitored is the liquid of the bioprocess comprising the medium and the biological cells.

Cytometry is applied to characterize living or dead biological cells, and preferably for an image cytometer using the invention at hand the cells to be characterized are provided in a liquid. For instance, density, size and morphology of biological cells may be determined by microscopy. In the absence of reliable and quantitative in-line measurement methods, bioengineers have to take samples to perform cytometry with off-line measurement devices. This requires taking a sample volume of the bioreactor within certain intervals, which increases the risk of contamination. In addition, it is time-consuming and due to the sparse interval, little statistics and no live information about cytometry is available to the operator. An in-line cytometer, characterizing the biological cells in the, typically liquid, environment in which they are cultivated, would drastically reduce the complexity compared to off-line methods and would allow the process controller to monitor the cell count and cell characteristics, such as the ones named above, close to real-time.

In certain applications, the sample volume in which objects are sharply imaged may be optically confined:
In a first dimension, the sample volume can be optically confined by the depth of field of the microscope. Preferably, it is the objective lens unit which determines the depth of field of the microscope. In the two dimensions perpendicular to the first dimension it is the area imaged which confines the sample volume optically:
the area is determined for instance, by the field of view of the microscope, defined for example by the size of the optical sensor attached to the microscope or by an aperture arranged in the optical path, for example the front end optical aperture.
The area imaged can also be delimited once the image is obtained, for example by a suitable cropping or by the choice of a suitable sub-region of respectively in the obtained image.
An objective lens unit comprising an immersion lens, such as a solid immersion lens, to collect light through a front end optical aperture, for instance, provides a depth of field of some *µ*m only. However, the axial position of the sample volume along the direction of view of the microscope might be of interest, but may not be reliably determined without any reference in the sample. There might also be a desire to scan the sample, i.e., to record frames at different axial positions.

WO 2019/081333 suggests a microscope including an autofocus-control which includes an electrically tuneable lens. The autofocus-control, however, relies on the reflection of a monitoring beam at a coverslip-sample interface and is thus not suitable for in-line and in-situ applications, like in-line cytometry, which do not use coverslips.

### Summary of invention

The herein claimed invention is defined by the appended claims.

It is an object of the present disclosure to suggest the subject matter initially mentioned. In one aspect, the herein disclosed subject matter shall enable referencing an object plane in which objects are sharply imaged to structures of the microscope, such as a distal front end optical aperture of the microscope, or an objective lens unit of the microscope, respectively.

This is achieved by the subject matter set forth in the appended claims. Further effects and advantages of the disclosed subject matter, whether explicitly mentioned or not, will become apparent in view of the disclosure provided below.

Accordingly, disclosed is an objective lens unit for a microscope

The objective lens unit comprises an enclosure having a distal front end. Said distal front end may hereinafter also be referred to as the front end. A front end optical aperture of the objective lens unit is provided in the distal front end of the enclosure. The objective lens unit further comprises an objective lens system arranged inside the enclosure and proximal from the front end optical aperture of the objective lens unit. The objective lens system is configured to collect light received through the front end optical aperture of the objective lens unit. The objective lens system comprises an adjustable lens. The objective lens unit further comprises at least one optical component distal from the adjustable lens. For example, the at least one optical component can be between the optical lens system and the front end optical aperture or inside the front end optical aperture. Preferably, the at least one optical component is the most distal optical component of the objective lens unit. There is at least one optically detectable target provided on the at least one optical component.

The adjustable lens is in particular configured to amend the effective focal length of the objective lens system. Examples of adjustable lenses are set forth below. Generally, the adjustable lens may for instance, comprise a lens having a variable focal length, be an axially displaceable lens, and/or an axially displaceable lens having a variable focal length.

The at least one optically detectable target allows to adjust the at least one adjustable lens such that at least one of the at least one optically detectable target is sharply imaged, for instance on an image captured by an optical sensor of the microscope using said objective lens unit.

An object plane, as used in the context of the present application, is a plane in which objects provided in the said plane are sharply imaged on, for instance, a sensor of a camera connected to the objective lens unit. The effective focal length of the objective lens system influences the axial position of the object plane. Objects located in the object plane create a sharp image on the objective lens system's image plane. This image plane of the objective lens system could be either the object plane for an ocular or a camera connected to the objective lens system or there could be an optical sensor at said image plane. In all cases, the amendment of the effective focal length can be used to adapt the axial position of the object plane of the objective lens system while maintaining its image plane, implying that neither the sensor nor -if present- an ocular or a camera would need to be adapted or moved. In addition, if the effective focal length of either the objective lens system or the whole objective lens unit has changed over time - something which may happen for example due to mechanical or thermal stresses occurring during use and/or cleaning of the device- it can be corrected by amending the effective focal length of the objective lens system with the adjustable lens. For the ease of reference, the effective focal length will be called "focal length" in the following.

The at least one object plane defined by the at least one optically detectable target is called "reference object plane" in the following: It is the object plane in which at least a characteristic part of the optically detectable target is located.
The axial position of the reference object plane is called the "reference position". "Axial position" and "axial distance" refers to the axial coordinate in a coordinate system using cylindrical coordinates with the optical axis defining the axial direction. Therefore, for example, a target may have the same axial position as its reference object plane, independent of it being arranged on-axis or off-axis. Similarly, the axial distance of two targets from each other could be the difference in their axial positions.
The magnitude of adjustable lens adjustment may be understood as a physical parameter applied to adjust the adjustable lens for shifting the object plane. Dependent on the design of the adjustable lens and the actuation method used to adjust the adjustable lens, the magnitude of adjustable lens adjustment may be defined by different physical parameters. The skilled person will readily determine which change in a physical parameter and/or which physical parameters represent the magnitude of adjustable lens adjustment. The magnitude of adjustable lens adjustment may for instance be a magnitude of axial displacement of an axially displaceable lens or a control signal of, for example, a given strength or duration, provided to a tuneable lens, or a combination of both.

The characteristic part of the optically detectable target, which is used to define the reference object plane, is also call "focussing target" in the following.
In preferred embodiments, an optically detectable target is a focussing target, however in some embodiments, a single target can comprise multiple focussing targets as explained in more detail below. It goes without saying that this implicitly requires at least one of the at least one optical target to be arranged at an axial position within the range of object planes which can be sharply imaged by the objective lens unit with the adjustable lens. In addition, an optical target needs to be identifiable as such on an image. Preferably, it is therefore sufficiently different from visually similar structures on images of planes above and below the plane with the at least one optically detectable target. In embodiments, the optically detectable target is fabricated specifically for this purpose for example by machining, cutting, etching, printing, or otherwise altering the at least one optical component.

In embodiments, the optically detectable target is a geometric figure, such as for example a cross, a circle, a point, a square or a triangle, or a combination of such figures in either 2- or 3-dimensional space.

In some embodiments, the field of view of the objective lens unit or a microscope using the objective lens unit, is greater than the section of the resulting image with is evaluated for measurement purposes. In these embodiments, the optically detectable targets are preferably arranged in a region which is not evaluated for measurement purposes. Thereby any obstruction of the measurements by the targets is avoided. In other embodiments however, the targets are in the area imaged which will be used for the measurements: As the targets are typically strongly out-of-focus during the measurements, the influence on the final image is negligible.

Preferably, the targets are a set of crosses: These targets are easy to recognise with automated image processing and allow to detect a sharpness. Further, they are easy to produce and differ significantly from shapes of biological cells.

In embodiments, the objective lens system may comprise, besides the adjustable lens, at least one fixed and fixed focal length lens. Said lens is spatially fixed with respect to the enclosure of the objective lens unit and it has a fixed focal length. The at least one fixed and fixed focal length lens may in particular comprise at least one aspheric lens.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

The adjustable lens may be a motorless automated adjustable lens. A motorless system yields certain advantages. For instance, a motorless system may be provided autoclavable. In another aspect, adjustment of the automated adjustable lens may be effected without inducing vibrations. In still other aspects, the motorless automated adjustable lens may be installed in a compact enclosure of an objective lens unit and /or be used at a wide temperature range.

The motorless automated adjustable lens may comprise one of a tuneable lens and a lens axially displaceable along an optical axis of the objective lens unit by a piezo actuator. Tuneable lenses are commercially available. They are configured to controllably change the radius of curvature of at least one of the light-refracting surfaces and thus their focal length. Common tuneable lenses are autoclavable. A lens displaceable by the piezo actuator may comprise or be a fixed focal length lens or may comprise or be a tuneable lens. As will be appreciated, also piezo actuators are compact and work vibration-free.

At least one of the at least one optically detectable target may be provided on a plane surface extending perpendicular to the optical axis of the objective lens unit. As will be appreciated, said plane surface may define the reference object plane, i.e the object plane in which said optically detectable target may be sharply imaged.

In embodiments where the target is or comprises a geometric figure, it is preferably such a geometric figure which extends on said plane surface. In this case, if the object plane is chosen to coincide with the reference object plane, said geometric figure will appear completely in focus, making it easier to detect it on captured images.

An immersion lens may be provided distal from the adjustable lens and configured to receive light through the front end optical aperture. With the use of an immersion lens, a relatively narrow depth of field, typically measuring only some µm along an axial direction, or direction of view, and a field of view captured by a suitable sensor of for instance 150 µm x 150 µm, optically defines a narrow sample volume. Manufacturing tolerances and tolerances or misalignments occurring during the use, such as when the objective lens unit undergoes autoclave treatment or is exposed to thermal or mechanical stress, may be corrected by the use of the adjustable lens. The adjustable lens allows to move the actual object plane of the objective lens unit or the microscope to coincide with the intended object plane and to thereby place the sample volume at the intended position relative to the objective lens unit or the microscope.

The immersion lens might be a solid immersion lens, so-called SIL, but may in other instances comprise a liquid immersion lens. In the latter case, the front end optical aperture of the objective lens unit may be closed by a window as the most distal optical component. The liquid immersion lens, in this case, is provided with a gap between the window and the liquid immersion lens. The gap is filled with a liquid. The material of the window, the liquid, and the immersion lens are chosen such that the refractive indices match well-defined relations, wherein the shape and focal length of the immersion lens may further be considered. Persons skilled in the art of microscopy and/or optical engineering are perfectly familiar with the appropriate choice of materials and design. Solid immersion lenses generally have the shape of truncated spheres, wherein they most commonly comprise one half of a sphere, so called hemispherical SILs, or more than half of a sphere, so-called Weierstrass SILs, also referred to as superhemispherical SILs of superSILs. In this case, the front-end optical aperture of the objective lens unit may be closed by a SIL as the most distal optical component. In some embodiments, a solid immersion lens may be cemented to or pressed against a window closing the front end optical aperture. Such a window can be optimised to withstand the conditions of the liquid to be observed, the cleaning procedures commonly used in bioprocessing, delay soiling and/or the attachment of air bubbles. For example, the window can be made of sapphire. In some embodiments, a coating is applied to the SIL to improve the durability and/or the observation conditions, similar as a window. The coating can be an anti-reflection coating. In this case, the front end optical aperture of the objective lens unit may be closed by a coated SIL or a SIL-window combination as the most distal optical component. Persons skilled in the art of microscopy and/or optical engineering are familiar with the appropriate choice of materials and design to ensure that the optical properties of the SIL-window or SIL-coating combination are still those of a SIL, i.e. enhanced numerical aperture, by ensuring that the index of refraction of the combination remains greater than the one of standard glasses, preferably greater than 1,5.

A solid immersion lens provides a high numerical aperture with a comparatively small entrance area, which in turn reduces noise and enhances the resolution. Therefore, objectives incorporating immersion lenses as a front lens have a narrow depth of field. Typically, the depth of field which can be sharply imaged on an optical sensor measures some *µ*m. The field of view captured by a suitable sensor might for instance be 150 µm x 150 µm. Thus, a very narrow sample volume is defined optically and needs not to be mechanically delimited. In the context of cell cytometry, the narrow depth of field largely serves to avoid that cells overlapping each other in the direction of view are captured in an image and thus serves to avoid interferences of overlapping cells.

In further non-limiting embodiments, at least one of the at least one optically detectable target is provided on a most distal component of the objective lens unit. As will be appreciated, an intended object plane during the data collection is distal of the distal front end of the enclosure of the objective lens unit, or of the front end optical aperture, respectively. The sample volume is typically, in axial direction, centred around the intended distance of the intended object plane. The choice of the intended object plane determines therefore the axial position of the sample volume. The skilled person will appreciate the benefit of using a reference object plane which is located as close as possible in axial direction to the intended object plane, i.e. the object plane desired for data collection and/or measurements. Or, in other words, it is beneficial to use a reference position which is close to the axial position of the sample volume. The proximity reduces on the one hand errors induced by uncertainties in the adjustment of the adjustable lens and on the other hand, it reduces the magnitude of variation in axial distance which needs to be archivable by the adjustable lens in order to reach both, the intended object plane and the reference object plane.

Said most distal optical component of the objective lens unit may be one of an immersion lens and a window closing the front end optical aperture. If the most distal optical component is an immersion lens, it is preferably, a SIL, a coated SIL or a SIL-window combination Thereby, the addition of further optical components is avoided, facilitating the production. In addition, by providing the optically detectable target on the most distal optical component, all shifts which might occur proximal of said most distal optical component can be compensated.

At least one of the at least one optically detectable target may be 3-dimensionally shaped. Thereby, the target extends in the axial direction, for example parallel to or along the optical axis of the objective lens unit. In being 3-dimensionally shaped, such an optically detectable target provides two focussing targets at different axial positions and at a known axial distance from each other. For example, a 3-dimensionally shaped optical target can comprise two sets of edges which are axially offset from each other, such as the edges of two sides of a cube. As outlined below in more detail, the two focussing targets may be used to calibrate a magnitude of adjustable lens adjustment versus a related axial shift of the object plane. The magnitude of adjustable lens adjustment can be, for example, the magnitude or duration of an actuation signal or a setting of the adjustable lens. Each focussing target can be used to define a reference object plane.

In embodiments, the target is or comprises a 2-D geometric figure extending in a plane with an angle of less than 90° towards the optical axis. In these embodiments only parts of the geometric figure appear in focus at a given setting or actuation signal of the adjustable lens and therefore at an actual object plane.

In other embodiments, the objective lens unit comprises at least one first optically detectable target and at least one second optically detectable target, wherein the at least one first optically detectable target and the at least one second optically detectable target are provided at different axial positions. Preferably, the at least one first optically detectable target and/or the at least one second optically detectable target extend perpendicular to or across the optical axis. The at least one first optically detectable target and the at least one second optically detectable target provide two focussing targets at different axial positions and therefore in different reference object planes. The axial distance between the two reference object planes is preferably known. This axial distance might be used to calibrate an adjustment magnitude of the adjustable lens versus a related axial shift of the object plane. The meaning of the term adjustment magnitude is outlined in more detail above. Further optically detectable targets may be provided at further axial positions. Thereby further focussing targets and further reference object planes can be defined. This might be useful, for instance, to calibrate a non-linear relationship between an adjustment magnitude of the adjustable lens versus a related axial shift of the object plane. At least two optically detectable targets provided at different axial positions may have different shapes, such that when the respective optically detectable target is sharply imaged, the respective reference object plane may be identified.

It may, in further embodiments, be provided that the enclosure comprises a cap and a sleeve, wherein the objective lens system is provided inside the sleeve. The cap comprises a lateral sheath, a front wall and a rear port. In addition, the cap comprises the at least one optical component. The front end optical aperture of the objective lens unit is provided in the front wall of the cap. At least one of the at least one optically detectable target is provided on the at least one optical component of the cap. The sleeve can be at least partially received inside the cap, in particular through the rear port of the cap. The cap can be at least partially received inside the sleeve, in particular the lateral sheath of the cap can be at least partially received in the front end of the sleeve while the objective lens system might extent at least partially through the rear port. The front wall of the cap forms the front end of the enclosure, in particular if the sleeve is received inside the cap. In embodiments, the sleeve may be threadedly received inside the cap. In embodiments, the cap may be threadedly received inside the sleeve. A sealing, for instance provided by an O-ring, may be provided between the cap and the sleeve. In other embodiments, the sleeve may simply be plugged into the cap, wherein, of course, the sleeve and the cap can be equipped with centering means, such that the optical axis of any optical component provided in the cap and of the objective lens system coincide when the sleeve is received inside the cap. Such embodiments are possible due to the adjustability of the motorless automated adjustable lens: relative shifts between the at least one optical component of the cap and the objective lens system appearing due to mounting the cap to the sleeve can be corrected by the adjustable lens.

The cap may for instance be fixed to a bioreactor and extend through a port of the bioreactor, with the front wall of the cap positioned inside the bioreactor and the rear port of the cap being accessible from outside the bioreactor. Preferably, a distal front section of the sleeve is received in the part of the cap positioned inside the bioreactor in such a way that said cap forms a liquid tight boundary between the inside and the outside of said bioreactor. Such an embodiment has the advantage that only the cap needs to be sterilized and/or cleaned, as it is only the cap which is in contact with the content of the bioreactors while the sleeve can be removed for SIP, CIP or sterilization. This lowers the requirements on the sleeve and the objective lens system mounted in it to, for example, withstand great temperature changes. The sleeve may successively be plugged into different caps so as to be used in different bioreactors or at different locations of one bioreactor.

In this respect, also a cap is suggested which is configured be part of an objective lens unit having an enclosure comprising a sleeve and a cap, as described above. The cap comprises a rear port, a front wall and a lateral sheath extending axially from the front wall. A front end optical aperture is formed in the front wall. The cap further comprises at least one optical component, wherein a most distal one of the at least one optical component closes the front end optical aperture, and wherein at least one optically detectable target is provided on at least one of the optical components. The lateral sheath is configured to receive a sleeve therein or to be received in a sleeve. The cap is configured to either receive the sleeve in an axial direction through the rear port or to be received by the sleeve in an axial direction whereby the lateral sheath of the cap is inserted in said sleeve. The rear port is at a back end of the cap. Benefits and embodiments of a cap of the suggested kind are outlined above in connection with an objective lens unit having an enclosure comprising a sleeve and a cap.

In more particular non-limiting embodiments, at least one of the at least one optically detectable target may be provided on the most distal one of the at least one optical component of the cap. This has the advantage that at least one of the optically detectable targets is suitable to provide the information needed to compensate shifts between the objective lens system in the sleeve and the optical components of the cap. In addition, this target is as close as possible to the intended sample volume. In most cases, there is only a small distance between the intended object plane and the reference object plane defined by the at least one optically detectable target provided on the most distal one of the at least one optical component of the cap.

Further disclosed is a microscope comprising an objective lens unit of any type set forth above and an optical sensor functionally coupled to the objective lens unit to receive light transmitted from a front end of the objective lens unit and through the objective lens system. In particular aspects, the microscope may be configured for attaching it to a bioreactor comprising a standard port, wherein the microscope is further configured such that at least a distal section of the objective lens unit, i.e., in particular the section comprising the front end optical aperture, may be positioned inside the bioreactor, whereas a microscope head may be located outside the bioreactor. The microscope may further include a sample illumination unit comprising an illumination source and a means for coupling light from the illumination source into the objective lens unit. The sample illumination unit may in instances be arranged in a microscope head or in the objective lens unit, as described above. The optical path of the light emitted from the sample illumination unit and the optical path of the light collected from the sample coincide at least along sections of the respective optical paths. The optical sensor may in particular comprise an image sensor and more in particular a CCD or CMOS image sensor. The optical sensor may be arranged in a microscope head or may be integrated in the objective lens unit. The microscope may further comprise a control unit functionally coupled to the objective lens unit and control the adjustable lens. The microscope may further include control hardware configured to control the sample illumination unit and the optical sensor, and further means configured to evaluate and/or transmit optical data collected and recorded by the optical sensor. In particular, the means configured to evaluate optical data can comprise the computer hard- and software to detect focussing targets on images and to cause an adjustment of the adjustable lens by an adjustable lens adjustment magnitude to shift the object plane to an intended object plane. In preferred embodiments, the means configured to evaluate optical data can comprise the computer hard- and software to additionally detect different focussing targets at different reference distances on images, to preferably assign the detected focussing targets to the distances between each other, to evaluate or read out the respective adjustment calibration differences, to use the information about the distances and the adjustment calibration differences to determine the required adjustable lens adjustment magnitude to set the object plane to the intended object plane position and to cause an adjustment of the adjustable lens by the required adjustable lens adjustment magnitude as well as by further adjustable lens adjustment magnitudes to shift the object plane to the intended object planes and the reference object planes needed to determine the adjustment calibration differences.

Still further aspects of the herein disclosed subject matter relate to a method for setting the object plane of a microscope. The microscope comprises at least one optical sensor and at least one adjustable lens. The at least one adjustable lens is configured to axially shift an object plane of the microscope relative to a distal end of the microscope. The object plane is intended to designate a plane in which objects are sharply imaged on the at least one optical sensor. Further at least one optically detectable target is provided in an area imaged on the optical sensor and at a determined axial position relative to the distal end of the microscope. In particular, said axial position is determined along the optical axis of the microscope. For non-limiting instances, the microscope may comprise an objective lens unit of any type set out above. The method comprises the step of defining an intended object plane position relative to the distal end of the microscope which is located an intended distance distal from the distal end of the microscope. The method further comprises the step of adjusting the at least one adjustable lens until the at least one optically detectable target is sharply imaged on the optical sensor, whereby the object plane includes the at least one optically detectable target. In this configuration, the actual object plane coincides with the reference object plane. As the at least one optically detectable target is at the determined axial position, the reference object plane is also at this determined axial position with respect to the distal end of the microscope. The object plane is thus set at the determined axial position with respect to the distal end of the microscope. As both, the determined axial position and the intended object plane position are known with respect to the distal end of the microscope, the axal distance between said two positions is known, too. The method further comprises adjusting the at least one adjustable lens to axially move the object plane along the optical axis of the microscope to the intended object plane position.

A person skilled in the art will, with sufficient information of the optical system used and the characteristics of the adjustable lens, or the adjustment actuator of the adjustable lens, respectively, be readily enabled to determine the required magnitude of the adjustable lens adjustment for axially shifting the object plane a certain distance and in a certain direction. Thus, once the adjustable lens is adjusted to set the object plane to a well-defined reference position, the skilled person is readily enabled to shift the axial position of the object plane by a defined distance to the intended object plane. The determined axial position is an example of a well-defined reference position.

Preferably, said method is carried out by a control unit of the microscope which is functionally coupled to control the adjustable lens and which comprises means configured to evaluate and/or transmit optical data collected and recorded by the optical sensor. In embodiments, the microscope is coupled to an external computation device for carrying out said method. In this embodiment, the microscope comprises a control unit which is functionally coupled to control the adjustable lens and which is suitable to communicate with the external computation device. The external computation device receives image data from the microscope and comprises means configured to evaluate optical data collected and recorded by the optical sensor. The external computation device of this embodiment is equipped to evaluate the received data and to issue control signals to the microscope to carry out the above method.

The distal end of the microscope might preferably be the distal front end of an objective lens unit being part of said microscope.

It may further be provided that two focussing targets are provided at different axial positions. These two focussing targets are provided in an area imaged on the optical sensor and at a known axial distance from each other. Said two focussing targets are provided by at least one of the following option:
According to the first option, at least one of the at least one optically detectable target is 3-dimensionally shaped. Said 3-dimensionally shaped target comprises at least two optically distinct features at a known axial distance from each other.
These two optically distinct features form said two focussing targets. Said 3-dimensionally shaped target can have an extent along the optical axis of the microscope, whereby the two focussing targets are provided at different axial positions. Preferably, the optically distinct features are axially offset edges of the 3-dimensionally shaped optically detectable target.
According to the second option, at least one first optically detectable target is provided at a first defined axial position and at least one second optically detectable target is provided in at a second defined axial position. This first and the second optically detectable targets are at a known axial distance from each other.
They form the two focussing targets.

The two focussing targets can be provided in an area imaged on the optical sensor. Preferably, the focussing targets are provided by the use of an objective lens unit comprising at least one optically detectable target which is 3-dimensionally shaped and/or by the use of an objective lens unit comprising at least a first and second optically detectable target provided at different axial positions.

In such a configuration of the microscope, the method may comprise performing a first calibration adjustment by adjusting the at least one adjustable lens until a first one of the focussing targets is sharply imaged on the optical sensor. The actual object plane has thus reached a first axial reference position. Subsequently, a second calibration adjustment may be performed by adjusting the at least one adjustable lens until a second one of the focussing targets is sharply imaged on the optical sensor. The actual object plane has thus reached a second axial reference position. An adjustment calibration difference is determined as a magnitude of adjustable lens adjustment applied for shifting the object plane from the first focussing target to the second focussing target.

A required adjustable lens adjustment magnitude may then be determined. The required adjustable lens adjustment magnitude is the adjustment magnitude required to be applied to the adjustable lens to set the object plane from an actual position to the intended object plane position. Said required adjustable lens adjustment magnitude is determined from the adjustment calibration difference, the axial distance between the first one of the focussing targets and the second one of the focussing targets, and the axial distance between the first or the second one of the focussing targets and the intended object plane position. Finally, the at least one adjustable lens is adjusted by the required adjustable lens adjustment magnitude to set the object plane to the intended object plane position.

For instance, in a simple case in which the relationship between the adjustable lens adjustment magnitude and the axial shift of the object plane is known, or at least assumed, to be linear, a simple rule of three may be applied. As an example, to determine the required adjustable lens adjustment magnitude to set the object plane from the second axial reference position to the intended object plane position, the following calculation can be done: The previously determined adjustment calibration difference is divided by the axial distance between the two focussing targets and multiplied with the axial distance between the second axial reference position and the intended object plane position. The direction of the respective object plane shift needs, of course, to be considered in determining the sign of the result. The calculation may become more complex if the relationship between the adjustable lens adjustment magnitude and the axial shift of the object plane is not linear; however, a skilled person is familiar with computations of this kind.

It may be provided that more than two focussing targets are provided at different axial positions and in an area imaged on the optical sensor. This would enable to also determine parameters of a non-linear relationship between the adjustable lens adjustment magnitude and the axial shift of the object plane.

It will be appreciated that determining whether an optically detectable target or a focussing target is sharply imaged on a sensor, may be performed by known or easily obtainable software algorithms. In other embodiments, an operator may watch frames recoded from the sensor and decide when a sharp image is obtained and input this in a user interface. Other methods to determine whether a focussing target, or, more specifically an optically detectable target is sharply imaged on a sensor are readily conceivable by a skilled person. The shape and appearance of said optically detectable targets can be chosen to be easily recognisable by automated means. In addition, masks, filters and/or correlation functions can be applied to further facilitate and accelerate the recognition, if needed.

At least a distal or front section of the objective lens system, including the front end optical aperture, may be suitable for being submerged in a liquid. Further, at least the objective lens system, and in embodiments the entire objective lens unit, might be autoclavable or can remain mounted in a bioreactor during CIP or SIP procedures. In view of the latter requirement the automated adjustable lens is motorless.

A circumferential outer wall of the above described objective lens unit may be circular-cylindrical with an outer diameter of 25 mm or less and in particular 12 mm or less. This allows the objective lens unit to be inserted into a bioreactor through standard ports, such as Ingold standard access ports and Eldon-James ports.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

- Fig. 1: A microscope arranged for in-situ cytometry inside a bioreactor;
- Fig. 2: A first exemplary embodiment of an objective lens unit of the type herein suggested;
- Fig. 3: A second exemplary embodiment of an objective lens unit of the type herein suggested;
- Fig. 4: Detail of an exemplary embodiment of the arrangement of an immersion lens and front end optical aperture of an objective lens unit of the type herein suggested;
- Fig. 5: A further embodiment of an objective lens unit of the type herein suggested, which includes a sample illumination unit and a mirror arranged distal from the front end optical aperture;
- Fig. 6: A further possible arrangement of a mirror distal from the front end optical aperture;
- Fig. 7: An exemplary embodiment of an objective lens unit having a different tip geometry;
- Fig. 8: A view along an optical axis of an objective lens unit having focussing targets.
- Fig. 9a: A perspective view of a plan window as an example of the most distal optical component comprising two targets at different axial positions.
- Fig. 9b: A perspective view of a plan window as an example of the most distal optical component comprising a 3-dimensional target with two focussing targets at different axial positions.

It is understood that the drawings are partly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

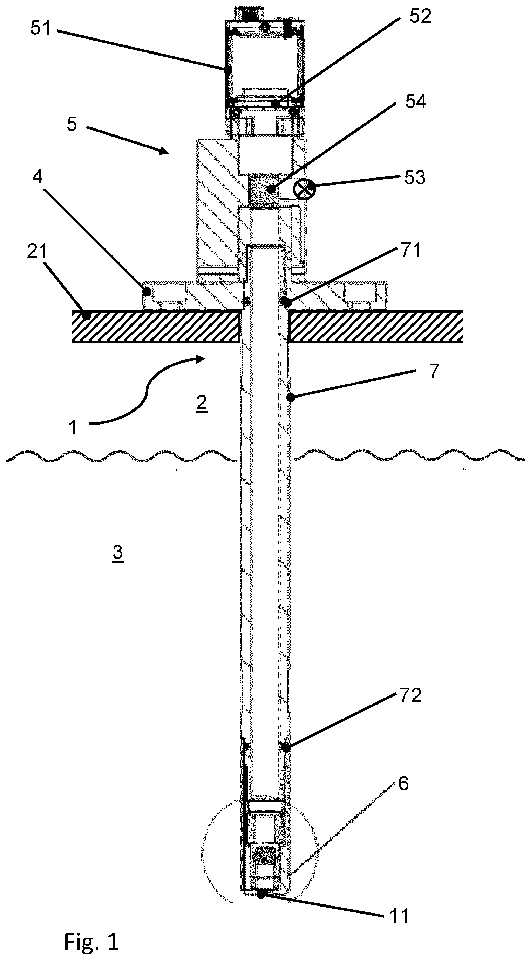

Figure 1 shows a microscope 1 mounted to wall 21 of tank 2 and extending through wall 21 into tank 2 and into sample liquid 3 contained in tank 2. Microscope 1 is attached to wall 21 of tank 2 by flange 4. Head 5 of microscope 1 is arranged outside tank 2. Camera 51 is mounted at a proximal end of microscope 1 and provides optical sensor 52. A distal end 11 of microscope 1 is provided by objective lens unit 6. Objective lens unit 6 and head 5 are connected by hollow shaft 7. O-ring sealings 71 and 72 are provided at the respective connections between shaft 7 and head 5 and shaft 7 and objective lens unit 6, respectively. Light collected by objective lens unit 6 at distal end 11 of microscope 1 passes along an optical path through hollow shaft 7 and is projected onto optical sensor 52 of camera 51. Optical sensor 52 and camera 51 are configured to capture or record light, or an image of an object, projected on optical sensor 52. Illumination source 53 is mounted to head 5 lateral from the optical path. Beam splitter 54 is arranged inside head 5 in in the optical path of light from objective lens unit 6 to optical sensor 52. Beam splitter 54 serves as a means for coupling light from illumination source 53 into objective lens unit 6 and deflects part of the light from illumination source 53 towards objective lens unit 6, where the light exits microscope 1 at distal end 11 and illuminates a sample volume of liquid 3. Light from the thus illuminated sample volume of liquid 3 enters microscope 1 at distal end 11 thereof and travels through objective lens unit 6 and hollow shaft 7 towards optical sensor 52. The light travelling back is partially deviated by beam splitter 54, while another share of the light from the sample volume travels to camera 51 and is captured by optical sensor 52. Thus, magnified views of objects in liquid 3 can be imaged and images be recorded by camera 51. The illumination and image optical paths coincide in large sections of the setup, that is, in the present depiction, below beam splitter 54. Tank 2 might be a bioreactor. Liquid 3 might hence contain biological cells. Cells might be observed in situ by use of the shown microscope 1. Microscope 1 thus enables in-situ cytometry. Illumination source 53 might be pulsed. One single pulse of typically some 10 *µ*s duration might be emitted by illumination source 53 per frame captured by camera 51. Hence, clear and sharp images of even strongly magnified objects may be obtained, even if the objects move. On the other hand, longer illumination times or multiple illumination pulses per frame recorded by camera 51 may assist in determining flow velocity and direction through the sample volume.

Light source 53 might emit monochromatic light or light at a narrow bandwidth to avoid chromatic aberration effects. Alternatively, a bandpass optical filter might be arranged in the illumination and/or imaging light path. In other embodiments, the sample volume might be illuminated by a broadband light source or a multi-colour light source, and optical sensor 52 might receive light at different wavelengths. Due to chromatic aberration, the distance of the object plane from which a sharp image is received on optical sensor 52 from the distal end 11 of microscope 1 is different for the different wavelengths, or colours. Thus, if light with sufficiently different wavelengths is used, some kind of 3D information of objects might be obtained.

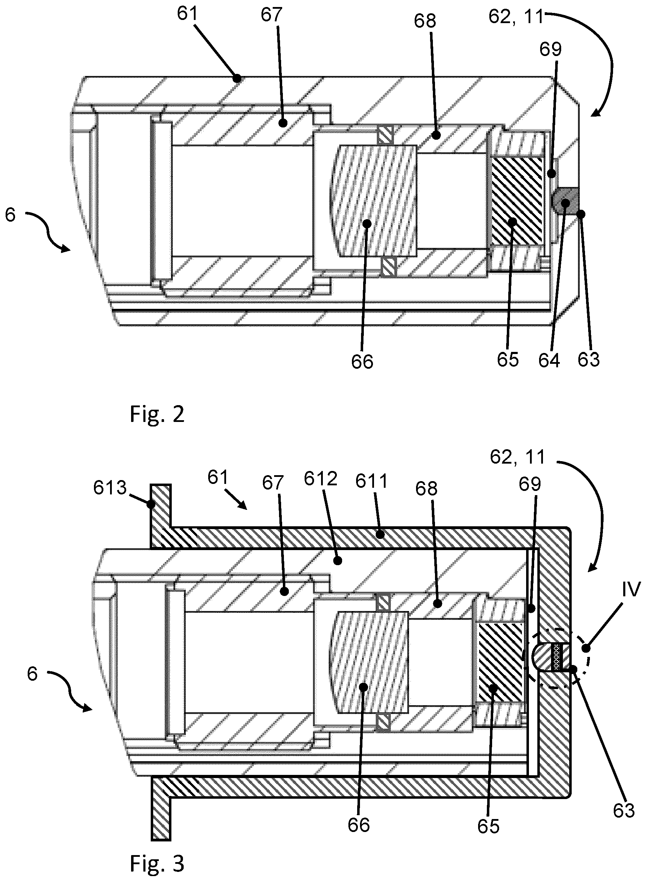

Figure 2 shows a more detailed view of objective lens unit 6. Exemplarily shown embodiment of objective lens unit 6 comprises enclosure 61 including optical components 64, 65 and 66. Front end optical aperture 63 is provided through enclosure 61 at a distal front end 62 of enclosure of objective lens unit 6, or distal end 11 of microscope 1, respectively. Generally, if objective lens unit 6 is provided in a microscope, distal front end 62 of enclosure of objective lens unit 6 is preferably used to define the distal end 11 of microscope 1. Light from illumination source 53 may exit objective lens unit 6 through front end optical aperture 63 and light from a sample volume may enter objective lens unit 6 through front end optical aperture 63. A solid immersion lens 64 is in the embodiment of Figure 2 arranged inside front end optical aperture 63 to receive light through front end optical aperture 63. Solid immersion lens 64 yields multiple purposes. On the one hand, a solid immersion lens provides a high numerical aperture with a comparatively small entrance area, which in turn reduces noise. On the other hand, objectives incorporating immersion lenses as a front lens have a narrow depth of field. Typically, the depth of field which can be sharply imaged on an optical sensor measures some *µ*m. The field of view captured by a suitable sensor might for instance be 150 µm x 150 µm. Thus, a very narrow sample volume is defined optically and needs not to be mechanically delimited. It is the intended object plane, archived by a suitable adjustment of the adjustable lens, which determines the axial position of the sample volume. The narrow depth of field largely serves to avoid that cells overlapping each other in the direction of view are captured in the same image and thus serves to avoid interferences of overlapping cells. Further, having a known sample volume allows to estimate cell densities. As cells have typically diameters in the range of a few *µ*m, the depth of field is of a similar order of magnitude. Optical components 65 and 66 jointly form an objective lens system arranged to collect light received by immersion lens 64 through front end optical aperture 63.

A disadvantage of using immersion lenses at the front end 62 of enclosure of objective lens unit 6 is that position tolerances of the arrangement of optical components 65 and 66 relative to immersion lens translate into a large variance of the position of the object plane which is sharply imaged on the optical sensor, and hence of the sample volume. DE 10 2015 014110 for instance states that 30 *µ*m precision is required to define the object plane with about 3 *µ*m accuracy. This, however, turns manufacturing such objective lens units with immersion lenses units expensive. In addition, it is difficult to maintain such a precision over the lifetime of the microscope, especially if it is subjected to thermal and/or mechanical stresses.

The herein suggested subject matter mitigates this issue. Lens 65 is a motorless automated adjustable lens. In embodiments, as in the shown example, a tuneable lens is used. It was shown that with off-the-shelf tuneable lenses manufacturing and assembly tolerances of 1 mm and more may be compensated by the change of focal length of the tuneable lens. In other embodiments, the adjustable lens might be displaceable along the axis of the objective lens unit 6 by a piezo actuator. Both exemplary solutions can be implemented inside the compact enclosure of the objective lens unit 6, are autoclavable, and may operate without vibrations. Tuneable lens 65 is provided next to immersion lens 64, with a small air gap 69 between tuneable lens 65 and immersion lens 64 such that deformation of the tuneable lens surface is not impeded by immersion lens 64. Lens 66 is arranged proximal of tuneable lens 65 and is for instance an aspheric lens. Lenses 65 and 66 are held in place by threaded sleeve 67, which is screwed into enclosure 61, and distance sleeve 68 to maintain the distance between aspheric lens 66 and tuneable lens 65. The distal or front surface of immersion lens 64 is flush with an outer surface of a distal front end of enclosure 61. Thus, less dirt and air bubbles can accumulate and objective lens unit 6 is easier to clean.

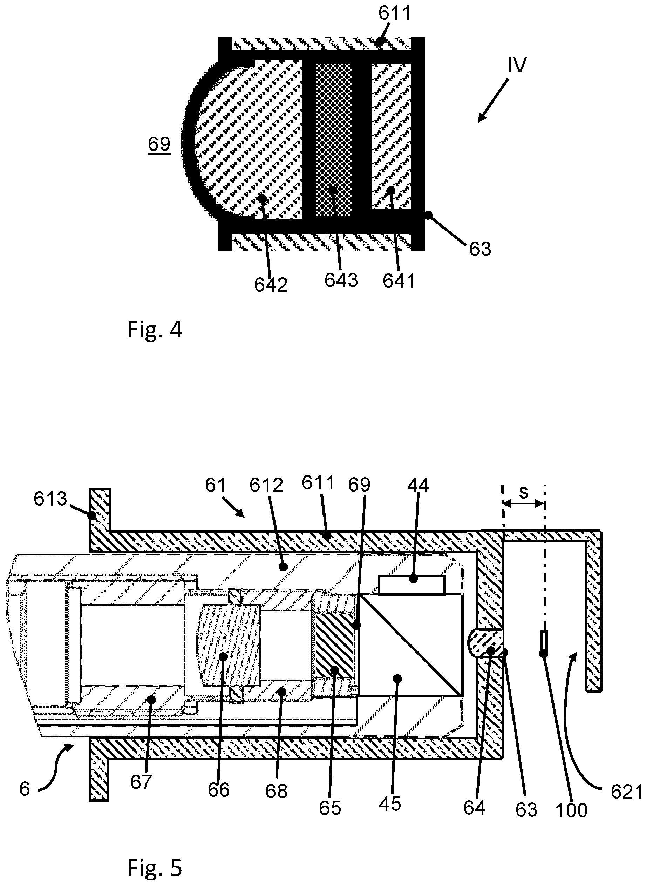

In another embodiment shown in figure 3, enclosure 61 comprises cap 611 and sleeve 612. Cap 611 comprises a distal front wall and a lateral sheath. A flange 613 extends radially outward at a proximal, rear end of the lateral sheath. The objective lens system, comprising tuneable lens 65 and aspherical lens 66, is provided inside sleeve 612. Generally, the assembly of the objective lens system is similar to that outlined in connection with figure 2. Sleeve 612 with the optical lens system provided therein may be inserted into cap 611 through a rear port of cap 611. Front end optical aperture 63 is provided in the distal front wall of cap 611. Turning to figure 4, detail IV is discussed. Plan window 641 closes front end optical aperture 63 distally and is provided flush with a distal outer surface of the front wall of cap 611. Liquid immersion lens 642 is provided proximal to window 641 with a gap 643 provided between liquid immersion lens 642 and window 641. Gap 643 is filled with an immersion liquid, such as oil, water, silicon or the like. The refractive indices of window 641, liquid immersion lens 642 and the immersion liquid inside gap 643 and the geometry of liquid immersion lens 642 are chosen to match well-defined relations, well-known to a person skilled in the art of microscopy and/or optical engineering. In still other embodiments, a solid immersion lens may be cemented to a distally arranged window distally closing the front end optical aperture. It is noted that these exemplary immersion lens assemblies may, of course, also be used in connection with an enclosure as shown in figure 2.

As is also seen in figure 4, air gap 69 is provided proximally adjacent immersion lens 642. Turning again to figure 3, it is seen that tuneable lens 65 is provided next to immersion lens 642. Sleeve 612 with the objective lens system may be functionally connected to an optical sensor at its proximal end such that an image transmitted through objective lens unit 6 may be captured by the optical sensor. For a non-limiting instance, a proximal end of sleeve 612 may be connected to a shaft 7, which in turn is connected to a microscope head 5, as shown in figure 1. A distal section of cap 611 may be inserted into a bioreactor through a port thereof and may be submerged in a sample liquid. Flange 613 remains outside the bioreactor and serves to fix cap 611 to the bioreactor. A rear port of cap 611 thus is provided outside the bioreactor. Cap 611 is, apart from the rear port, liquid-tight. Sleeve 612 with an optical sensor functionally connected thereto may be inserted into cap 611 from outside the bioreactor to jointly form a microscope suitable for in situ cytometry. The objective lens system and all components attached thereto are protected from contact with the liquid inside the bioreactor.

Still a further exemplary embodiment of objective lens unit 6 is illustrated in figure 5. An illumination unit comprising illumination source 44 and beam splitter 45 as a means for coupling light from illumination source 44 into objective lens unit 6 is provided in objective lens unit 6. Beam splitter 45 is arranged in the optical path of objective lens unit 6, while illumination source 44 is arranged lateral of the optical path. As will be appreciated, beam splitter 45 deflects part of the light from illumination source 44 in a forward or distal direction of objective lens unit 6 and towards immersion lens 64. Light is emitted through front end optical aperture 63 in a forward or distal direction of objective lens unit 6. Objective lens unit 6, through tuneable lens 65, is adjusted such that an object plane is located an intended distance s distal from the distal front end of enclosure of objective lens unit 6. A sample volume 100 is thus sharply imaged on an optical sensor functionally coupled to objective lens unit 6 and proximal from objective lens unit 6. The typical size of sample volume 100 is discussed above. However, back scatter from the biological cells in the sample volume may generally be low due to the small size and low difference in refractive index between the cells and the liquid in which the cells are suspended. Thus, a reflector 621, for instance a mirror or a retroreflector, is provided cantilevering from enclosure 61 of optical lens unit 6 and arranged in the optical axis of objective lens unit 6. Reflector 621 is arranged distal from the distal front end of enclosure of objective lens unit 6, or the distal end of microscope 1, respectively. It is understood that reflector 621 together with a cantilevering beam might be screwed or otherwise mounted to enclosure 61 of optical lens unit 6. Reflector 621 is arranged such that at least a part of the light emitted through front end optical aperture 63 is reflected back into front end optical aperture 63. Said reflected light passes through sample volume 100. Biological cells contained in sample volume 100 are thus illuminated from distal. Hence, forward scattered light from biological cells or other particles in sample volume 100 is received by optical lens unit 6 and imaged on an optical sensor functionally connected to the rear or proximal end of objective lens unit 6. The intensity of forward scattered light may be orders of magnitude higher than that of the backward scattered light. In that the forward scattered light rather than the backward scattered light is imaged on the optical sensor, the quality of the cytometry is improved.

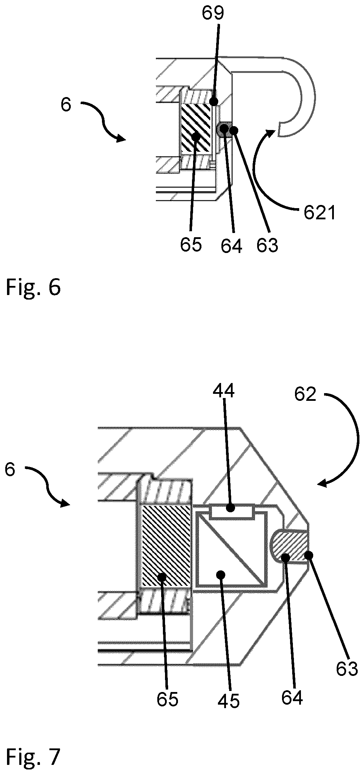

As illustrated in figure 6, reflector 621 may for another non-limiting instance also be provided on a U-shaped carrier. In any embodiments, it may moreover be provided that the distance between front end optical aperture 63 and reflector 621 may be varied.

Figure 7 illustrates an embodiment in which distal front end 62 of enclosure of the objective lens unit 6 is not flat, as shown in the examples of figures 2 through 6, but is generally convex, for instance conical. For other non-limiting instances, a front wall of distal front end 62 of enclosure of the objective lens unit 6 may be rounded, for instance dome-shaped.

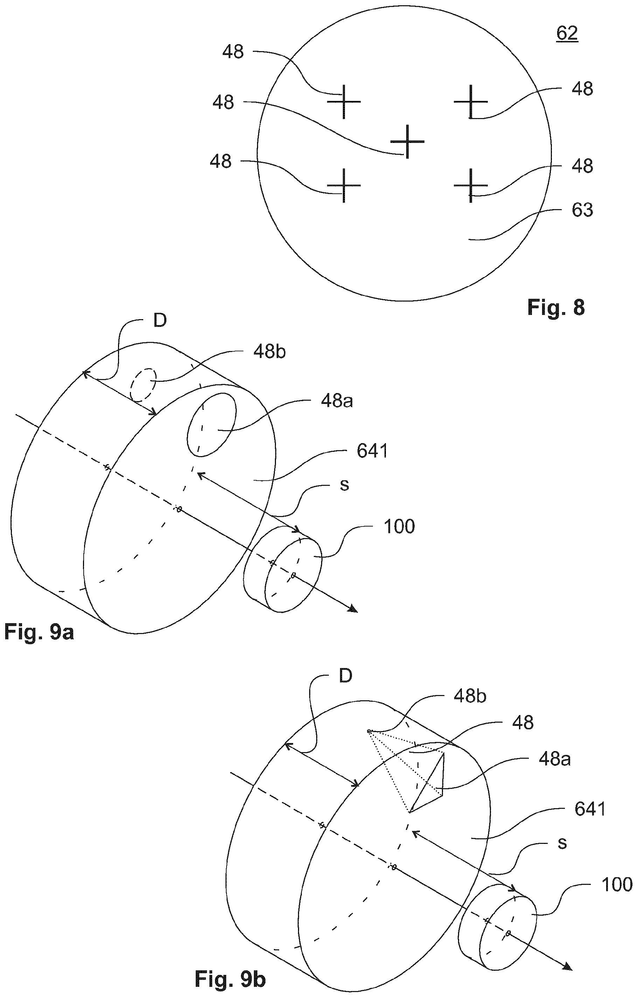

Figure 8 shows a plan view onto distal or front end 62 of the enclosure of an exemplary objective lens unit 6. One or more optically detectable targets 48 are provided on a distal surface of the optical component distally closing front end optical aperture 63, e.g. solid immersion lens 64 of figures 2, 5, 6 and 7, or window 641 of the embodiment illustrated in figures 3 and 4. These are focusing targets. In a mode of operating a microscope including said objective lens unit 6, tuneable lens 64 or other adjustable lens may be adjusted to generate a sharp image of these targets 48 on the optical sensor. The actual object plane is then the reference object plane, which is located at the reference position, a well-defined or determined axial position relative to the objective lens unit 6, or microscope 1, respectively. In the exemplary embodiment, the reference position is identical with the position of distal front end 62 of enclosure of objective lens unit 6, or distal end 11 of microscope 1, respectively. In other embodiments, it might be proximal of said front end, but at a well-defined distance from the front end. Thus, when the focusing targets appear as sharp imaged on the sensor, the position of the object plane relative to the objective lens unit 6 or the microscope 1 and their respective distal end 11 or distal front end 62 is known. If the intended position at which the sample volume should be is defined relative to the same end or part, the distance by which the object plane needs to be shifted to be at said intended distance distal from the distal front end 62 of the enclosure of objective lens unit 6, or relative to the distal end 11 of microscope 1, respectively, is known, too. Thus, tuneable lens 64 or another automated adjustable lens may subsequently be adjusted to shift the object plane by said distance and to thereby set the object plane an intended distance distal from front end optical aperture 63 such that objects, e.g. cells or particles, in the sample volume located said intended distance distal from front end optical aperture 63 are sharply imaged on the optical sensor.

Figure 9a depicts a perspective view of a plan window 641 as an example of the most distal optical component of the objective lens unit 6 comprising two targets 48a, 48b at different axial positions. The two targets 48a, 48b are both focusing targets. They are arranged at different axial positions. The axial distance D from each other is known: It is in this example the thickness of the plan window 641 on which they are provided. Therefore, the plane window 641 in the depicted example provides two reference positions in an axial distance D from each other. As the shown plane window 641 is the most distal optical component of the objective lens unit 6 and assuming that the microscope does not comprise further distal parts, the distal target 48a, arranged on the distal side of the window 641, has a determined axial position of zero relative to the distal end of the microscope. The axial position of the proximal target 48b is known due the knowledge of the axial distance D. If the microscope comprises additional parts, their relative positions are known and therefore also the determined axial position of the targets 48a, 48b.

In the shown example, the plan window 641 has the shape of a right cylinder with a circular base. The optical axis runs parallel to the normal vectors of the base of said cylinder and is therefore parallel or identical with the axis of rotational symmetry of the cylinder. It is depicted with an arrow in Fig. 9a. In the shown embodiment, one of the targets 48b is a smaller circle arranged on the proximal side of the window 641 and the other target 48a is a larger circle arranged on the distal side of the window 641. Target 48b defines a proximal reference object plane at a proximal reference position. Target 48a defines a distal reference object plane at a distal reference position. The sample volume 100 is shown at an intended distance s from the front end. In examples, the intended distance s can be chosen by the user, or it can be pre-set in a control of the microscope. The sample volume 100 is a volume of sample liquid 3. Particles and cells located within the sample volume 100 are sharply imaged by a microscope which uses the depicted plan window 641.

In a method according to the invention, an adjustable lens of said microscope is used to shift the object plan such that the proximal target 48b is sharply imaged. In this configuration, the object plane is the proximal reference object plane. In one embodiment, the magnitude of the adjustable lens adjustment applied for setting the object plane to the proximal reference object plane is stored. In another embodiment, a counter, suitable to capture the change in the magnitude of the adjustable lens adjustment is reset once the object plane is the proximal reference object plane. Then, the adjustable lens is used to shift the object plan such that the distal target 48a is sharply imaged. In this configuration, the object plane is the distal reference object plane. In one embodiment, the magnitude of the adjustable lens adjustment applied for setting the object plane to the distal reference object plane is compared with the magnitude of the adjustable lens adjustment applied for setting the object plane to the proximal reference object plane. In another embodiment, this comparison is the result of a suitable counter, measuring the change in the magnitude of the adjustable lens adjustment applied for moving the object plane from the proximal to the distal reference object plane. The result of this comparison is also called adjustment calibration difference. This adjustment calibration distance and the axial distance D between the proximal and distal reference position can be used to determine or to confirm the required adjustable lens adjustment magnitude. The required adjustable lens adjustment magnitude is the magnitude of the adjustable lens adjustment which is needed to move the object plane from the distal reference object plane, i.e. the position where the distal target 48a is sharply imaged, to the intended object plane position in the intended distance s, i.e. the position where the cells or particles in the sample liquid can be sharply imaged. The position of the sample volume 100 is defined by the intended distance s and the optical axis. The size of the sample volume 100 is delimited by the area imaged and the depth of field of the microscope.

Figure 9b illustrated another example of a plan window being the most distal optical component. In this case, said window comprises a 3-dimensional target with two focusing targets 48a and 48b at different axial positions. In this example, the target has the shape of a triangular pyramid offering a proximal focusing target 48b, in the shape of a point and a distal focusing target 48a in the shape of a triangle. On object planes lying between the proximal and distal reference object plane defined by said focusing targets 48a, 48b, a set of tree points, being the corners of triangles of different sizes, appear in focus. The distance between the points can serve as an indication of the position of the actual object plane. Such a 3-dimensional target can therefore be helpful to increase the speed and/or accuracy of the adjustment of the adjustable lens. Further, one can define further reference object planes to establish or confirm a non-linear relationship between the magnitude of the adjustable lens adjustment and the resulting shift the object plane.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 1: Microscope
- 2: Tank, bioreactor
- 3: Sample liquid
- 4: Flange
- 5: Head of microscope
- 6: Objective lens unit
- 7: Shaft
- 11: Distal end of microscope
- 21: Wall of tank or bioreactor
- 44, 53: Illumination source
- 45, 54: Means for coupling light from illumination source into objective lens unit; beam splitter
- 48: Target
- 48a, 48b: Focusing target
- 51: Camera
- 52: Optical sensor
- 61: Enclosure
- 62: Distal front end of enclosure of objective lens unit
- 63: Front end optical aperture
- 64: Solid immersion lens
- 65: Optical component, adjustable lens
- 66: Optical component, aspheric lens
- 67: Threaded sleeve
- 68: Distance sleeve
- 69: Air gap
- 71: O-ring sealing
- 72: O-ring sealing
- 611: Cap
- 612: Sleeve
- 613: Flange of cap
- 621: Mirror
- 641: Plan window
- 642: Immersion lens
- 643: Liquid-filled gap
- 100: Sample volume
- s: Intended distance, distance from front end of enclosure to sample volume
- D: Axial distance between two focusing targets

## Claims

1. Objective lens unit (6) for a microscope (1),
the objective lens unit (6) comprising an enclosure, the enclosure having a distal front end (62),
a front end optical aperture (63) of the objective lens unit provided in the distal front end (62) of the enclosure,
the objective lens unit (6) further comprising an objective lens system (65, 66) arranged inside the enclosure (61) and proximal from the front end optical aperture (63) of the objective lens unit,
wherein the objective lens system (65,66) is configured to collect light received through the front end optical aperture (63) of the objective lens unit,
wherein the objective lens system (65, 66) comprises an adjustable lens (65),
the objective lens unit (6) further comprising at least one optical component (64, 641, 642) distal from the adjustable lens wherein at least one optically detectable target (48) is provided on the at least one optical component (64).

2. Objective lens unit (6) according to the preceding claim, wherein the adjustable lens (65) is a motorless automated adjustable lens,
in particular, the motorless automated adjustable lens (65) comprises one of a tuneable lens and a lens axially displaceable along the optical axis of the objective lens unit (6) by a piezo actuator.

3. Objective lens unit (6) according to any preceding claim, wherein the at least one optically detectable target (48) is provided on a plane surface extending perpendicular to the optical axis of the objective lens unit (6).

4. Objective lens unit (6) according to any preceding claim, wherein an immersion lens (64, 642) is provided distal from the adjustable lens (65) and configured to receive light through the front end optical aperture (63).

5. Objective lens unit (6) according to any preceding claim, wherein at least one of the at least one optically detectable target (48) is provided on a most distal component (64, 641) of the objective lens unit (6).

6. Objective lens unit (6) according to the preceding claim, wherein the most distal optical component (64, 641) of the objective lens unit (6) is one of an immersion lens and a window closing the front end optical aperture.

7. Objective lens unit (6) according to any preceding claim, wherein at least one of the at least one optically detectable target (48) is 3-dimensionally shaped.

8. Objective lens unit (6) according to any preceding claim, wherein the objective lens unit (6) comprises at least one first optically detectable target and at least one second optically detectable target, wherein the at least one first optically detectable target and the at least one second optically detectable target are provided at different axial positions.

9. Objective lens unit (6) according to any preceding claim, the enclosure (61) comprising a cap (611) and a sleeve (612),
- wherein the objective lens system (65, 66) is provided inside the sleeve,
- the cap comprises a lateral sheath, a front wall, a rear port, and the at least one optical component (641, 642),
- wherein the front end optical aperture (63) of the objective lens unit (6) is provided in the front wall of the cap and
- the at least one optically detectable target (48) is provided on at least one optical component (641, 642) of the cap,
- wherein the sleeve (612) is at least partially received inside the cap (611) or wherein the cap (611) is at least partially received inside the sleeve (612).

10. A cap (611) configured for an objective lens unit (6) according to the preceding claim, wherein
- the cap comprises a rear port, a front wall and a lateral sheath extending axially from the front wall,
- wherein a front end optical aperture (63) is formed in the front wall,
- wherein the lateral sheath is either configured to receive a sleeve (612) therein wherein the sleeve is insertable in an axial direction through the rear port of the cap or configures to be received in the sleeve (612) wherein the lateral sheath is insertable in an axial direction in the sleeve,
- the cap comprising at least one optical component and wherein a most distal one of the at least one optical component closes the front end optical aperture (63), and
- wherein at least one optically detectable target (48) is provided on at least one of the optical components.

11. The cap (611) according to the preceding claim, wherein at least one of the at least one optically detectable target (48) is provided on the most distal one of the at least one optical component.

12. Microscope comprising an objective lens unit (6) according to any of claims 1 through 9 and an optical sensor (52), wherein the optical sensor (52) is functionally coupled to the objective lens unit (6) to receive light transmitted from a front end of the objective lens unit (6) and through the objective lens system (65, 66).

13. Method for setting the object plane of a microscope (1),
- wherein the microscope comprises at least one optical sensor (52) and at least one adjustable lens (65)
- wherein the at least one adjustable lens (65) is configured to axially shift the object plane of the microscope relative to a distal end (11) of the microscope, wherein the object plane is a plane in which objects are sharply imaged on the at least one optical sensor (52),
- and wherein further at least one optically detectable target (48) is provided in an area imaged on the optical sensor (52) and at a determined axial position relative to the distal end (11) of the microscope,
- the method comprising the steps of:
a. defining an intended object plane position relative to the distal end (11) of the microscope, located at an intended distance distal from the distal end (11) of the microscope,
b. adjusting the at least one adjustable lens (65) until the at least one optically detectable target (48) is sharply imaged on the optical sensor (52), and
c. adjusting the at least one adjustable lens to axially move the object plane along the optical axis of the microscope to the intended object plane position.

14. Method according to the preceding claim,
a. using two focussing targets which are provided at different axial positions, in an area imaged on the optical sensor and at a known axial distance (D) from each other
b. wherein the two focussing targets are provided by either
i. at least one of the at least one optically detectable target (48) being 3-dimensionally shaped and comprising, at a known axial distance from each other, at least two optically distinct features, each of these features forming one of the at least two focussing targets, and/or
ii. at least one first optically detectable target (48) at a first axial position and at least one second optically detectable target (48) at a second axial position, whereby the first axial position and the second axial position are at a known axial distance from each other, each of the first and the second optically detectable targets (48) forming one of the two focussing targets,
c. the method comprising the steps of:
i. performing a first calibration adjustment by adjusting the at least one adjustable lens (65) until a first one of the focussing targets is sharply imaged on the optical sensor (52),
ii. performing a second calibration adjustment by adjusting the at least one adjustable lens (65) until a second one of the focussing targets is sharply imaged on the optical sensor (52),
iii. determining an adjustment calibration difference as a magnitude of adjustable lens adjustment applied for shifting the object plane from the first focussing target to the second focussing target,
iv. determining a required adjustable lens adjustment magnitude required to set the object plane to the intended object plane position from the
• adjustment calibration difference,
• the axial distance between the first one of the focussing targets and the second one of the focussing targets, and
• the axial distance between the first or the second one of the focussing targets and the intended object plane position,
v. and adjusting the at least one adjustable lens by applying the required adjustable lens adjustment magnitude to set the object plane to the intended object plane position.
